# EUROPEAN PATENT APPLICATION

(11) **EP 3 396 527 A1**
(43) Date of publication of application: **31.10.2018**
(21) Application number: 18169615.4
(22) Date of filing: 26.04.2018
(51) Int. Cl.: G06F 8/61, G06F 9/451, G06F 8/38

(54) **ELECTRONIC DEVICE AND METHOD OF CONTROLLING THEREOF**

(30) Priority: 26.04.2017 KR 20170053586
(71) Applicant: Samsung Electronics Co., Ltd., Gyeonggi-do 16677 (KR)
(72) Inventor: MIN, Somina, Gyeonggi-do, (KR); GEUM, Hyegyung, Seoul, (KR); GIM, Eunsil, Busan, (KR); KIM, Eunjoo, Gyeonggi-do, (KR); JO, Hankyung, Seoul, (KR); HONG, Seunghwan, Seoul, (KR); LEE, Sangman, Gyeonggi-do, (KR)
(74) Representative: HGF Limited

(57) **Abstract**

Disclosed is an electronic device. The electronic device may include: a display; at least one processor operatively connected to the display; and a memory operatively connected to the processor, wherein the memory stores instructions that, when executed, cause, the at least one processor to, when installing an application received from an external electronic device, generate and store a first image in relation to the application and association information between the first image and the application and display, on the display, the first image as a widget image of a widget for the application. Various other embodiments may be provided.

## Description

### BACKGROUND

### 1) FIELD

Various embodiments of the present disclosure relate to a method for creating a widget in an electronic device.

### 2) DESCRIPTION OF RELATED ART

In general, electronic devices, such as portable terminals, are widely used based on their mobility. The electronic devices may support various user functions, in addition to a mobile communication function, and users may use various functions described above by using the electronic devices.

The above information is presented as background information only to assist with understanding of the present disclosure. No determination has been made, and no assertion is made, as to whether any of the above might be applicable as prior art with regard to the present disclosure.

### SUMMARY

An electronic device may receive various applications from an external electronic device, and may install the same. In this case, some applications may provide widgets, but others may not provide widgets.

In the case where an application does not provide a widget, the user must always execute the application when the user wishes to execute the application or view contents contained in the application, which may be tiresome to the user.

In accordance with an aspect of the present disclosure, an electronic device comprises a display; at least one processor operatively connected to the display; and a memory operatively connected to the processor, wherein the memory stores instructions that, when the executed by the one or more processors, cause the one or more processors to: when installing an application received from an external electronic device, generate and store a first image in relation to the application and association information between the first image and the application, and display, on the display, the first image as a widget image for a widget for the application.

In accordance with an aspect of the present disclosure, a method of controlling an electronic device may include: installing an application received from an external electronic device; generating a first image in relation to the application and association information between the first image and the application; storing the first image and the association information between the application and the first image; and displaying, on a display, the first image as a widget image of the widget for the application.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A is a perspective view showing an electronic device according to an embodiment;
FIG. 1B is a diagram for explaining an operation in which an electronic device, according to an embodiment, receives and installs an application to thus create a widget;
FIG. 2 is a block diagram of an electronic device according to various embodiments;
FIG. 3 is a diagram for explaining an operation in which an electronic device, according to an embodiment, creates a widget using an image included in an application store;
FIG. 4 is a diagram for explaining an operation in which an electronic device, according to an embodiment, executes different functions depending on a selected region in the created widget;
FIG. 5 is a diagram for explaining an operation in which an electronic device, according to an embodiment, changes and displays a widget when displaying another screen while maintaining the execution of an application;
FIG. 6 is a diagram for explaining an operation in which an electronic device, according to an embodiment, changes and displays a widget when the execution of an application is terminated;
FIG. 7 is a diagram for explaining an operation in which an electronic device, according to an embodiment, creates a widget using an image selected by a user;
FIG. 8 is a diagram for explaining another operation in which an electronic device, according to an embodiment, receives and installs an application to thus create a widget;
FIG. 9 is a flowchart for explaining an operation in which an electronic device, according to an embodiment, creates a widget using an image related to the received application;
FIG. 10 is a diagram illustrating an electronic device in a network environment in various embodiments; and
FIG. 11 is a block diagram of a program module according to various embodiments.

### DETAILED DESCRIPTION

Various embodiments of the present disclosure are described in greater detail with reference to the accompanying drawings. The same or similar components may be designated by the same or similar reference numerals although they are illustrated in different drawings. Detailed descriptions of implementations or processes known in the art may be omitted to avoid obscuring the subject matter of the present disclosure.

The terms used herein are defined in consideration of functions of the present disclosure and may vary depending on a user's or an operator's intention and usage. Therefore, the terms used herein should be understood based on the descriptions made herein. It is to be understood that the singular forms "a," "an," and "the" also include plural referents unless the context clearly dictates otherwise. In the present disclosure, an expression such as "A or B," "at least one of A and B" or "one or more of A and B" may include all possible combinations of the listed items. Expressions such as "first," "second," "primarily," or "secondary," as used herein, may represent various elements regardless of order and/or importance, and do not limit the corresponding elements. The expressions may be used for distinguishing one element from another element. When it is described that an element (such as a first element) is operatively or communicatively "coupled to" or "connected to" another element (such as a second element), the element may be directly connected to the other element or may be connected through another element (such as a third element).

The expression "configured (or set) to", as used in the present disclosure, may be used interchangeably with, for example, "suitable for," "having the capacity to," "designed to," "adapted to," "made to," or "capable of", according to the situation. The term "configured (or set) to" does not only refer to "specifically designed to" in hardware. Alternatively, in some situations, the expression "apparatus configured to" may refer to a situation in which the apparatus "may" operate together with another apparatus or component. The phrase "a processor configured (or set) to perform A, B, and C" may be a dedicated processor, a general-purpose processor (such as a central processing (CPU) or an application processor (AP)) that may perform a corresponding operation by executing at least one software program stored in a dedicated processor (such as an embedded processor) for performing a corresponding operation or in a memory device.

An electronic device, according to an embodiment of the present disclosure, may be for example, at least one of a smart phone, a tablet PC, a mobile phone, a video phone, an e-book reader, a desktop PC, a laptop PC, a notebook computer, a workstation, a server, a PDA, a portable multimedia player (PMP), an MPEG 3 (MP3) player, medical equipment, a camera, and a wearable device, and the like, but is not limited thereto. The wearable device may include at least one of an accessory type (e.g., a watch, a ring, a bracelet, an ankle bracelet, a necklace, eyeglasses, a contact lens, or a head-mounted-device (HMD)), a fabric or clothing embedded type (e.g., electronic garments), a body attachable type (e.g., a skin pad or a tattoo), and an implantable circuit, and the like, but is not limited thereto. The electronic device may be at least one of, for example, a television, a digital versatile disc (DVD) player, an audio device, a refrigerator, an air-conditioner, a cleaner, an oven, a microwave oven, a washing machine, an air cleaner, a set-top box, a home automation control panel, a security control panel, a media box, an electronic dictionary, an electronic key, a camcorder, and an electronic frame, and the like, but is not limited thereto.

In an embodiment of the present disclosure, the electronic device may be at least one of various medical devices (such as, various portable medical measuring devices (a blood sugar level measuring device, a heartbeat measuring device, a blood pressure measuring device, or a body temperature measuring device), a magnetic resonance angiography (MRA) device, a magnetic resonance imaging (MRI) device, a computed tomography (CT) device, a scanning machine, and an ultrasonic wave device), a navigation device, a global navigation satellite system (GNSS), an event data recorder (EDR), a flight data recorder (FDR), a vehicle infotainment device, electronic equipment for a ship (such as, a navigation device for a ship and a gyro compass), avionics, a security device, a head unit for a vehicle, an industrial or home robot, a drone, an automated teller machine (ATM), a point of sales (POS) device, and an Internet of things (IoT) device (e.g., a light bulb, various sensors, a sprinkler device, a fire alarm, a thermostat, a street light, a toaster, sports equipment, a hot water tank, a heater, and a boiler), and the like, but is not limited thereto.

According to an embodiment of the present disclosure, the electronic device may be at least one of a portion of furniture, building/construction or vehicle, an electronic board, an electronic signature receiving device, a projector, and various measuring devices (e.g., water supply, electricity, gas, or electric wave measuring device), and the like, but is not limited thereto. An electronic device may be a flexible electronic device or a combination of two or more of the foregoing various devices. An electronic device is not limited to the foregoing devices, and may be embodied as a newly developed electronic device. The term "user", as used herein, may refer to a person using an electronic device or a device using an electronic device (e.g., an artificial intelligence electronic device).

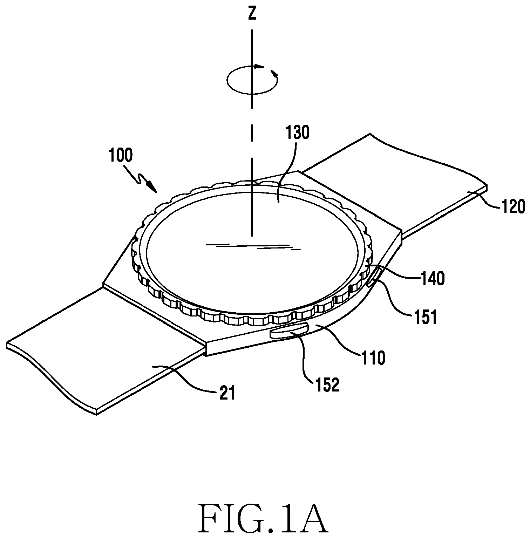

FIG. 1A is a perspective view showing an electronic device 100 according to an embodiment.

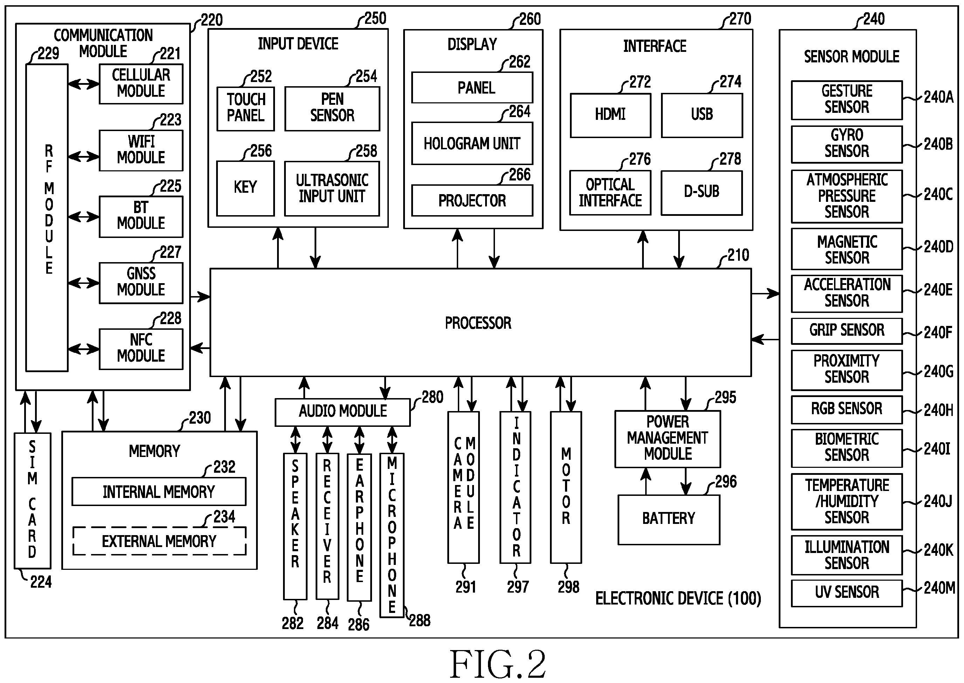

Referring to FIG. 1A, the electronic device 100 may be a wrist-wearable device that can be worn on the user's wrist. However, the present disclosure is not limited thereto. The electronic device 100, described in more detail in Figures 2, 10, and 11 can install an application received form an external electronic device. According to an embodiment, the electronic device 100 may include a housing 110 and a connection part (e.g., strap) 120 that is coupled to the housing 110. According to an embodiment, the electronic device 100 may include a battery (e.g., a rechargeable battery or the like) therein as power supply means. The electronic device 100 may also be implemented so as to be selectively placed on a portable charging cradle to thus charge a battery.

According to an embodiment, the housing 110 may include a display 130. The display 130 may include a touch screen to receive a touch input. The display 130 can display the first image as a widget image for a widget associated with, or generated from, the application. A rotary input module 140 may be disposed on one side of the housing 110. Although the housing 110 is illustrated as having a cylindrical shape in the drawing, the housing 110 may be formed in various shapes (e.g., a rectangle, a polygon, or the like). According to an embodiment, the rotary input module 140 may be disposed in a bezel area surrounding the edge of the display 130 provided on the upper surface of the housing 110. Alternatively, the rotary input module 140 may be disposed on the side surface of the housing 110 in the same manner as a crown of a watch. The rotary input module 140 may or may not be provided in the form of a protrusion. According to an embodiment, the rotary input module 140 may be rotated clockwise or counterclockwise about a rotational axis (z-axis), and may be configured such that the amount of rotation is limited to a predetermined value (e.g., 360 degrees), or is not limited.

The electronic device 100, according to an embodiment, may include one or more physical keys. For example, the electronic device 100 may include a first button 151 and a second button 152 on one side of the housing 110.

The electronic device 100, for example, may perform a function of returning to a previous screen in response to a user input of pressing the first button 151. In addition, the electronic device 100 may perform a function of displaying a home screen in response to a user input of pressing the second button 152. For example, the electronic device 100 may display information including the current time on the home screen. However, the functions of the first button 151 and the second button 152 are not limited thereto. Furthermore, the electronic device 100, based on a user input, may assign different functions to the first button 151 and the second button 152.

According to an embodiment, the connection part 120 may be made of at least one of metal, leather, rubber, silicone, and urethane. The connection part 120 may be variously configured so as to be worn on a specific position of a human body such as a neck, an ankle, or a wrist.

According to an embodiment, when a user rotates the rotary input module 140, the electronic device 100 may perform various functions according to rotation parameters of the rotary input module 140. For example, the electronic device 100 may detect rotation parameters of the rotary input module 140 using a plurality of rotation-recognizing parts. For example, the plurality of rotation-recognizing parts may include an optical sensor for recognizing an optical pattern of the rotary input module 140 to thus detect rotation parameters, a magnetic sensor for sensing a magnetic force of a magnet mounted inside the rotary input module 140 to thus detect rotation parameters, or other sensors, such as a hall sensor, for detecting a rotational input. Here, the rotation parameters may include at least one of a rotational direction, a rotation speed, a rotation amount, and a rotated position of a rotor.

The electronic device 100 of Figure 1A can be configured to execute a variety of application programs. The application programs can be downloaded from an external source. In certain embodiments, application programs can be represented by an execution objects, such as icons, comprising a picture on a home screen. Additionally, a widget can be created from the application. The widget can be represented by the picture.

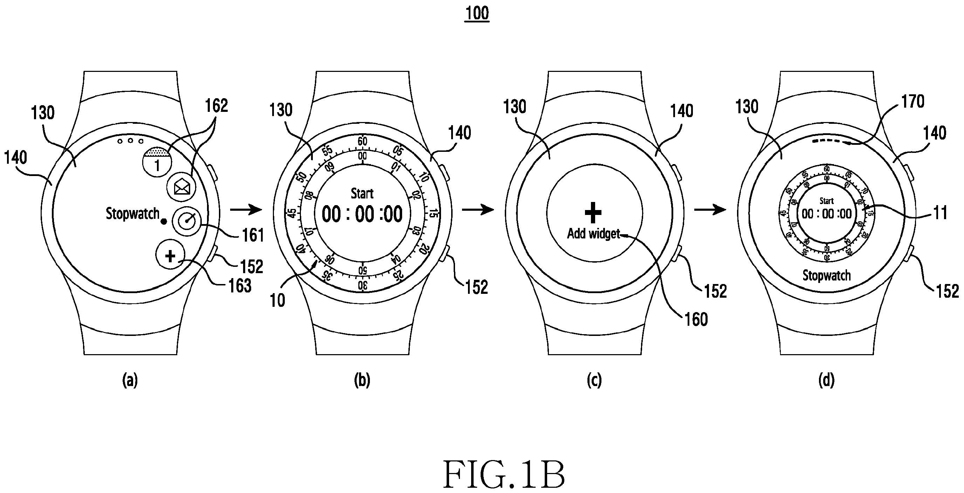

FIG. 1B is a diagram for explaining an operation in which an electronic device, according to an embodiment, receives and installs an application to thus create a widget.

An application, for example, may refer to any software running in the application system of the electronic device. In addition, the application may refer to software that is directly used by a user in the application system of the electronic device.

A widget can be made and provided to the user, and is an interface allowing access to contents provided by applications, such as a clock, a calendar, a notepad, a search, a map, news, a real-time camera, and the like, without separately executing the applications.

According to an embodiment, the electronic device 100 may receive various applications from an external electronic device (e.g., a server, another electronic device, or the like) that communicates with the electronic device 100, and may install the same. In certain embodiments, the external electronic device can include an application store. The electronic device 100 and the external electronic device may establish wired or wireless communication therebetween. The communication between the electronic device 100 and the external electronic device will be described in detail in FIG. 2.

Referring to (a) of FIG. 1B, the electronic device 100 may display a home screen with execution objects, such as icons representing one or more installed applications on the display 130. According to an embodiment, the electronic device 100 may display, on the display 130, the respective applications in the form of an execution object for activating the same. The user may select an execution object displayed on the display 130 to thus execute a corresponding application, by for example, touching the execution object.

For example, in the case where the electronic device 100 has installed a stopwatch application received from an external electronic device, the electronic device 100 may display an execution object 161 corresponding to the stopwatch application on the display 130. The electronic device 100 may also display other execution objects 162 corresponding to pre-installed applications, such as a calendar, or email. Additionally, an application can access objects that are receivable from an external electronic device, such as a store application.

According to an embodiment, in response to selection of a predetermined execution object (e.g., an execution object 163 indicated by "+"), the electronic device 100 may display applications, which can be received from an external electronic device, on the display 130, or may display a store application (e.g., Google Play™, Apple App Store™, One Store™, or the like) from which the applications can be received (for example, downloaded).

In the case where the electronic device 100 receives an application from an external electronic device to thus install the same, the application may create a widget. An application can include a variety of functions. A widget, for example, may include self-contained code, separate from the application itself, for a graphic user interface (GUI) for quickly executing a specific one of the function of the application. The electronic device 100 may execute an application, or may execute a predetermined function in relation to the application in response to a user input of selecting a widget, instead of selecting an execution object corresponding to the application. The widget may be displayed on one side of the display 130, or may not be displayed according to a user input.

According to an embodiment, the electronic device 100 may display one or more objects for executing widgets corresponding to the applications in response to a first input. The first input, for example, may be an operation of rotating the rotary input module 140 or a touch-and-drag input onto the display 130 by the user. In this case, the electronic device 100 may display objects for executing one or more widgets on the display 130. For example, the electronic device 100 may sequentially display the objects for executing widgets on the display 130 in response to repeated first inputs.

In addition, the electronic device 100 may display one or more execution objects corresponding to the applications in response to a second input. The second input, for example, may be an operation of pressing the second button 152 included in the electronic device 100. In this case, the electronic device 100 may display one or more execution objects on the display 130. For example, the electronic device 100 may sequentially display a plurality of execution objects on the display 130 in response to the rotation of the rotary input module 140 after the second input.

That is, the electronic device 100, according to an embodiment, may provide a user interface that separates the display of the execution objects from the display of the objects for executing the widgets. As a result, the user may display, on the display 130, objects for executing widgets that are frequently used or perform specific functions, and may conveniently use the same.

According to an embodiment, the application may, or may not, provide objects for executing widgets depending on the type thereof. The electronic device 100 of the present disclosure may create a widget using an image in relation to an application, even if the application does not provide a widget. The image can be used as part of the object for executing the widget. The image can be an image from the application, an image obtained from the external electronic device or application store, of the first or initial execution screen when the application is launched or started, or the last execution screen when the application was most recently terminated or finished, Alternatively, if only some of the various functions provided by the application are provided as widgets, the electronic device 100 may create widgets related to the remaining functions, which are not provided as widgets.

Referring to (b) of FIG. 1B, the electronic device 100 may select a first image 10 in relation to the stopwatch application. The first image 10, for example, may be an image obtained by copying the first, or initial execution screen (the screen that launches when the application is opened) of the stopwatch application. However, this is not limited thereto. According to another embodiment, the first image 10 may be an image obtained by copying the last, or more recent execution screen of the stopwatch application, or may be an image provided by the stopwatch application.

The electronic device 100, for example, may generate the first image 10 using an image obtained by copying the first execution screen of the stopwatch application, and may store the same in a memory of the electronic device 100. Simultaneously or sequentially, the electronic device 100 may generate and store association information showing that the first image 10 is related to the stopwatch application. The association information, for example, may refer to information indicating that if the first image 10 is selected by a user input, the electronic device 100 is to activate or execute the stopwatch application.

For example, the activation of the application may mean that the electronic device 100 is displaying a preparation screen prior to executing the function of the application. In addition, the execution of the application may mean that the electronic device 100 is in the stage of displaying a screen on which the function of the application is being executed. However, it is not limited thereto.

Referring to (c) of FIG. 1B, the electronic device 100 may display, on the display 130, an execution object that guides the addition of a widget so as to allow a widget to be added. For example, in response to a first input, the electronic device 100 may display execution objects for all of the widgets. After displaying all of the widgets in response to repeated first inputs by the user, the electronic device 100 may display an execution object 160 that guides the addition of a widget on the display 130. In certain embodiments, the execution object 160 for creating a widget guides addition of a widget for the most recently launched application.

Referring to (d) of FIG. 1B, in response to a user input of selecting an execution object 160 that guides the addition of a widget, the electronic device 100 may display, on the display 130, a list of execution objects for widgets that can be displayed. In some embodiments, execution objects for the widget can include an image from the application store, a first execution screen, a last execution screen, or an image from the application.

For example, the electronic device 100 may include an execution object for a stopwatch widget 11, which is created by configuring the first image 10 generated in (b) of FIG. 1B as a widget image, in the list of execution objects for widgets, and may display the same on the display 130. The electronic device 100 may sequentially display other execution objects for widgets in response to rotation of the rotary input module 140 or a touch-and-drag input onto the display 130, which include other ones of image from the application store, a first execution screen, a last execution screen, or an image from the application. The electronic device 100, for example, may display objects 170 indicating the number of widgets that can be selected on one side of the display 130.

According to an embodiment, based on a user input for selecting the stopwatch widget 11 included in the list of widgets, the electronic device 100 may display the object for executing the stopwatch widget 11 on the display 130. Then, the user may select the stopwatch widget 11 to thus use a function thereof by, in certain embodiments, touching the object for executing the stopwatch widget 11 on the display 100.

For example, when a user input for selecting the stopwatch widget 11 is received, the electronic device 100 may execute the stopwatch application, which is stored so as to be related to the first image 10 generated as part of the execution object for the stopwatch widget 11.

As described above, even when the application does not provide a widget, the electronic device 100 may create a widget using an image related to the application, and may provide the same to the user.

FIG. 2 is a block diagram of an electronic device 100 according to various embodiments.

The electronic device 100 includes one or more processors (e.g., an AP) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210, for example, may include various processing circuitry and may control a plurality of hardware or software components connected to the processor 210, and also may perform various data processing and operations by executing an OS or an application program. The processor 210 may be implemented with a system on chip (SoC), for example. The processor 210 may further include a graphic processing unit (GPU) and/or an image signal processor. The processor 210 may include at least part (e.g., a cellular module 221) of the components illustrated in FIG. 2. The processor 210 may load one or more instructions (or commands) or data received from at least one other component (e.g., a nonvolatile memory) into a volatile memory, process the one or more instructions, and store various data in the nonvolatile memory.

The communication module 220 may have the same or similar configuration as the communication interface 170 of FIG. 1. The communication module 220 may include various communication circuitry, such as, the cellular module 221, a Wi-Fi module 223, a Bluetooth™ (BT) module 225, a GNSS module 227, an NFC module 228, and an RF module 229. The cellular module 221, for example, may provide voice call, video call, short message service (SMS), or Internet service through a communication network. The cellular module 221 may identify and authenticate the electronic device 100 in a communication network by using the SIM 224. The cellular module 221 may perform at least part of a function that the processor 210 provides. The cellular module 221 may further include a CP. At least some (e.g., two or more) of the cellular module 221, the Wi-Fi module 223, the BT module 225, the GNSS module 227, and the NFC module 228 may be included in one integrated circuit (IC) or an IC package. The RF module 229, for example, may transmit/receive a communication signal (e.g., an RF signal). The RF module 229, for example, may include a transceiver, a power amp module (PAM), a frequency filter, a low noise amplifier (LNA), or an antenna. At least one of the cellular module 221, the Wi-Fi module 223, the BT module 225, the GNSS module 227, and the NFC module 228 may transmit/receive an RF signal through an additional RF module.

The SIM 224, for example, may include a card or an embedded SIM, and also may contain unique identification information (e.g., an integrated circuit card identifier (ICCID)) or subscriber information (e.g., an international mobile subscriber identity (IMSI)).

The memory 230 (e.g., the memory 130) may include at least one of an internal memory 232 or an external memory 234. The internal memory 232 may include at least one of, for example, a volatile memory (e.g., dynamic RAM (DRAM), static RAM (SRAM), or synchronous dynamic RAM (SDRAM)), and a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory, hard drive, and solid state drive (SSD)). The external memory 234 may include flash drive, for example, compact flash (CF), secure digital (SD), micro SD, mini SD, extreme digital (xD), multi-media card (MMC), or memory stick. The external memory 234 may be functionally or physically connected to the electronic device 100 through various interfaces.

In certain embodiments, the memory 230 includes a directory, such as "/data/app/" which includes a listing of each of the applications. When an application is downloaded, the application can be stored in the "/data/app" directory.

The sensor module 240 may, for example, measure physical quantities or detect an operating state of the electronic device 100, and convert the measured or detected information into electrical signals. The sensor module 240 includes at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green, blue (RGB) sensor). The sensor module 240 may also include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one sensor therein. The electronic device, as part of the processor 210 or individually, may further include a processor configured to control the sensor module 240 and control the sensor module 240 while the processor 210 is sleeping.

The input device 250 may include various input circuitry including at least one of a touch panel 252, a (digital) pen sensor 254, a key 256, and an ultrasonic input device 258. The touch panel 252 may use at least one of, for example, capacitive, resistive, infrared, and ultrasonic methods. Additionally, the touch panel 252 may further include a control circuit. The touch panel 252 may further include a tactile layer to provide a tactile response to a user. The (digital) pen sensor 254 may include, for example, part of a touch panel or a sheet for recognition. The key 256 may include, for example, a physical button, a touch key, an optical key, or a keypad. The ultrasonic input device 258 may detect ultrasonic waves from a microphone 288 and check data corresponding to the detected ultrasonic waves.

The display 260 (e.g., the display 160) may include at least one of a panel 262, a hologram device 264, a projector 266, and/or a control circuit for controlling them. The panel 262 may be flexible, transparent, or wearable, for example. The panel 262 and the touch panel 252 may be configured with one or more modules. The panel 262 may include a pressure sensor (or a force sensor) for measuring a pressure of the user touch. The pressure sensor may be integrated with the touch panel 252, or include one or more sensors separately from the touch panel 252. The hologram device 264 may show three-dimensional images in the air by using the interference of light. The projector 266 may display an image by projecting light on a screen. The screen, for example, may be placed inside or outside the electronic device 100.

The interface 270 includes various interface circuitry, such as an HDMI 272, a USB 274, an optical interface 276, or a D-subminiature (D-sub) 278. The interface 270 may be included in, for example, the communication interface 170 of FIG. 1. Additionally or alternately, the interface 270 may include a mobile high-definition link (MHL) interface, a SD card/MMC interface, or an infrared data association (IrDA) standard interface.

The audio module 280, for example, may convert sounds into electrical signals and convert electrical signals into sounds. At least some components of the audio module 280 may be included in, for example the input/output interface 150 of FIG. 1. The audio module 280 may process sound information input or output through a speaker 282, a receiver 284, an earphone 286, or the microphone 288.

The camera module 291, as a device for capturing still images and videos, may include one or more image sensors (e.g., a front sensor or a rear sensor), a lens, an image signal processor (ISP), or a flash (e.g., an LED or a xenon lamp).

The power management module 295, for example, may manage the power of the electronic device 100. According to an embodiment of the present disclosure, the power management module 295 may include a power management IC (PMIC), a charger IC, or a battery gauge, for example. The PMIC may have a wired and/or wireless charging method. The wireless charging method may include, for example, a magnetic resonance method, a magnetic induction method, or an electromagnetic method, and may further include an additional circuit for wireless charging, for example, a coil loop, a resonant circuit, or a rectifier circuit.

The battery gauge may measure the remaining charge capacity of the battery 296, or a voltage, current, or temperature of the battery 296 during charging. The battery 296 may include, for example, a rechargeable battery and/or a solar battery.

The indicator 297 may display a specific state of the electronic device 100 or part thereof (e.g., the processor 210), for example, a booting state, a message state, or a charging state. The motor 298 may convert electrical signals into a mechanical vibration and generate a vibration or haptic effect. The electronic device 100 may include a mobile TV supporting device (e.g., a GPU) for processing media data according to standards such as digital multimedia broadcasting (DMB), digital video broadcasting (DVB), or MediaFlo™. Each of the above-described components of the electronic device may be configured with at least one component and the name of a corresponding component may vary according to the kind of electronic device. According to an embodiment of the present disclosure, the electronic device 100 may be configured to include at least one of the above-described components or an additional component, or to not include some of the above-described components. Additionally, some of components in an electronic device are configured as one entity, so that functions of previous corresponding components are performed identically.

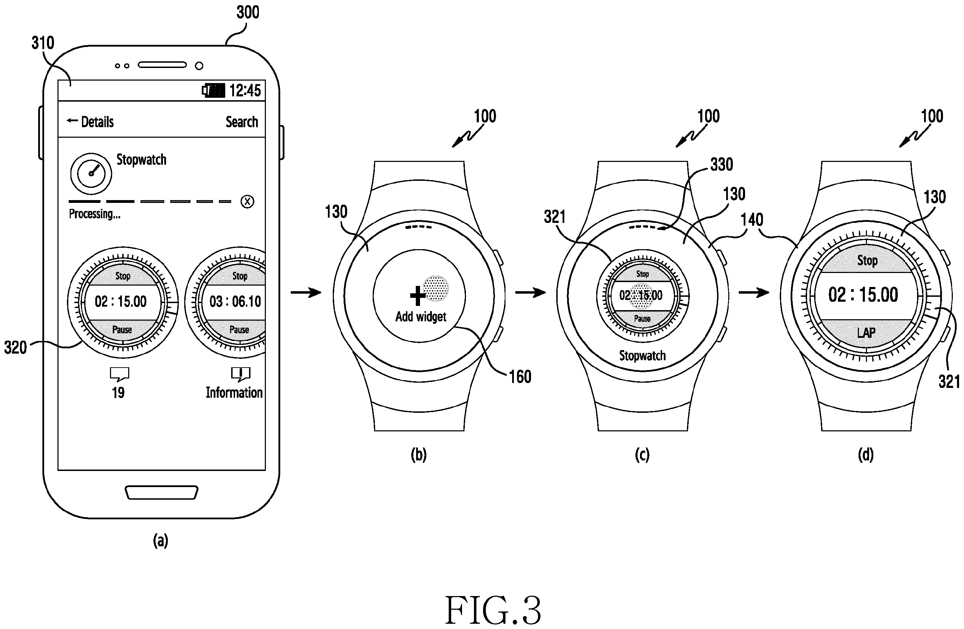

FIG. 3 is a diagram illustrating an operation in which an electronic device, according to an embodiment, creates a widget using an image included in an application store as a widget image.

According to an embodiment, the electronic device 100 may receive an application using another electronic device that communicates with the electronic device 100.

For example, another electronic device 300, such as a smartphone or a tablet PC, may execute a store application for receiving applications. The user may select an application which can be transmitted to the electronic device 100 and another electronic device 300 from the store application.

In response to the selection of an application by the user, another electronic device 300 may receive a description of the selected application from the store application, and may display the same on the display 310. In this case, another electronic device 300 may display, on the display 310, representative image(s) 320 corresponding to the selected application.

Referring to (a) of FIG. 3, another electronic device 300 may display, on the display 310, a description of the stopwatch application selected by the user and a representative image 320 corresponding to the stopwatch application.

According to an embodiment, another electronic device 300, based on a user input, may transmit the stopwatch application to the electronic device 100. The electronic device 100 may receive and install the stopwatch application, and may simultaneously or sequentially store the representative image 320 as a first image (e.g., the first image 10 in FIG. 1A) to thus create a widget image and a widget using the same.

Referring to (b) of FIG. 3, the electronic device 100 may display all of the widgets in response to repeated first inputs by the user (e.g., the first input in FIG. 1B), and may display, on the display 130, an execution object 160 that guides the addition of a widget.

Referring to (c) of FIG. 3, in response to a user input for selecting the execution object 160 that guides the addition of a widget, the electronic device 100 may display, on the display 130, a list of execution objects for widgets that can be displayed. For example, the electronic device 100 may display, on the display 130, an execution object for a stopwatch widget 321 created in (a) of FIG. 3. The electronic device 100 may sequentially display other execution objects for the stop watch widget in response to rotation of the rotary input module 140 or a touch-and-drag input onto the display 130. The electronic device 100, for example, may display an object 330 indicating the number of widgets that can be selected on one side of the display 130.

Referring to (d) of FIG. 3, the electronic device 100 may display the selected execution object for the stopwatch widget 321 on the display 130. In this case, the electronic device 100 may activate or execute a stopwatch function in response to a user input for selecting the stopwatch widget 321.

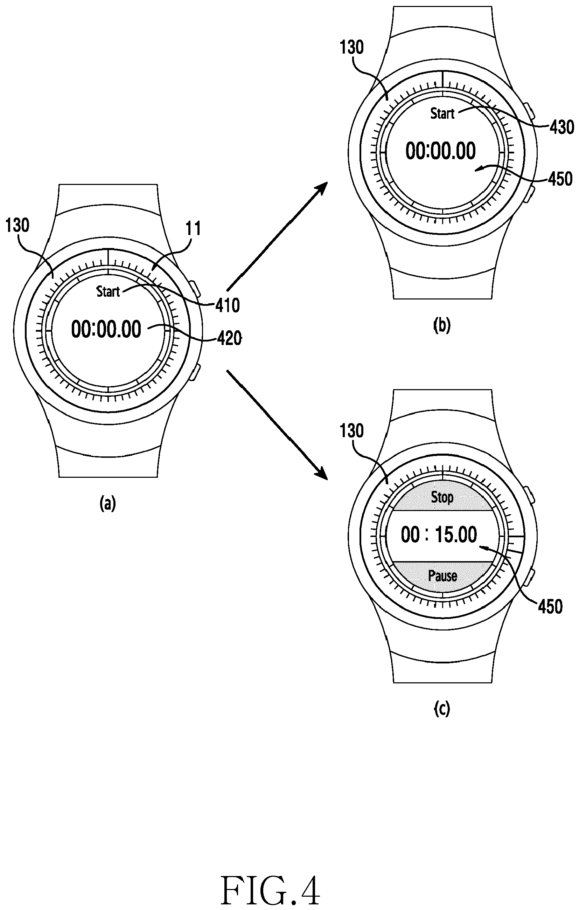

FIG. 4 is a diagram for explaining an operation in which an electronic device, according to an embodiment, executes different functions depending on a selected region of a created execution object for the widget.

Referring to (a) of FIG. 4, the electronic device 100 may display an execution object for the stopwatch widget 11 on the display 130. The execution object for the stopwatch widget 11 may be created through the process described above with reference to FIG. 1B.

According to an embodiment, based on a user input for selecting a region of the display 130 on which the execution object for the widget 11 is displayed, the electronic device 100 may perform different functions. For example, based on a user input for selecting a first region of the display 130 on which the execution object for the widget 11 is displayed, the electronic device 100 may perform a first function, and based on a user input for selecting a second region different from the first region, the electronic device 100 may perform a second function. The user input may be, for example, a touch input by the user. However, the user input is not limited thereto.

The electronic device 100, for example, may generate a first image 10 (e.g., the first image 10 in FIG. 1B) using an image obtained by copying the first execution screen of the stopwatch application to thus store the same in a memory of the electronic device 100, and may simultaneously or sequentially generate and store association information stating that the first image 10 (e.g., the first image 10 in FIG. 1B) is related to the stopwatch application. The association information, for example, may indicate that if the first image 10 (e.g., the first image 10 in FIG. 1B) is selected by a user input, the electronic device 100 activates or executes the stopwatch application.

The electronic device 100 may store, as the association information, information in which different functions are matched with respective regions of the first image (e.g., the first image 10 in FIG. 1B).

For example, the electronic device 100 may store, as the association information, an operation in which, when the text "Start" 410 is touched with coordinate information on the position of the text "Start" 410 on the display 130, a stopwatch function is started, and the stopwatch application is displayed on the display 130.

In addition, the electronic device 100 may store, as the association information, an operation in which, when the display of time 420 is selected with coordinate information on the position of the display of time 420 on the display 130, the stopwatch application is activated to then be displayed on the display 130.

Referring to (b) of FIG. 4, based on a user input for selecting a portion where the time 420 is displayed in a region of the display 130 on which the execution object for the widget 11 is displayed, the electronic device 100 may activate the stopwatch application 450, and may display the same on the display 130. In this case, the electronic device 100 may execute a stopwatch function, based on a user input for touching a portion where the text "Start" 430 is displayed on the stopwatch application 450.

Referring to (c) of FIG. 4, based on a user input for selecting a portion where the text "Start" 410 is displayed in a region of the display 130 on which the execution object for the widget 11 is displayed, the electronic device 100 may immediately execute the stopwatch function. This allows the electronic device 100 to display, on the display 130, the stopwatch application 450 in which the stopwatch function is in progress. That is, the electronic device 100 may immediately start the stopwatch function so that the user does not need to make a separate input for the execution of the stopwatch function.

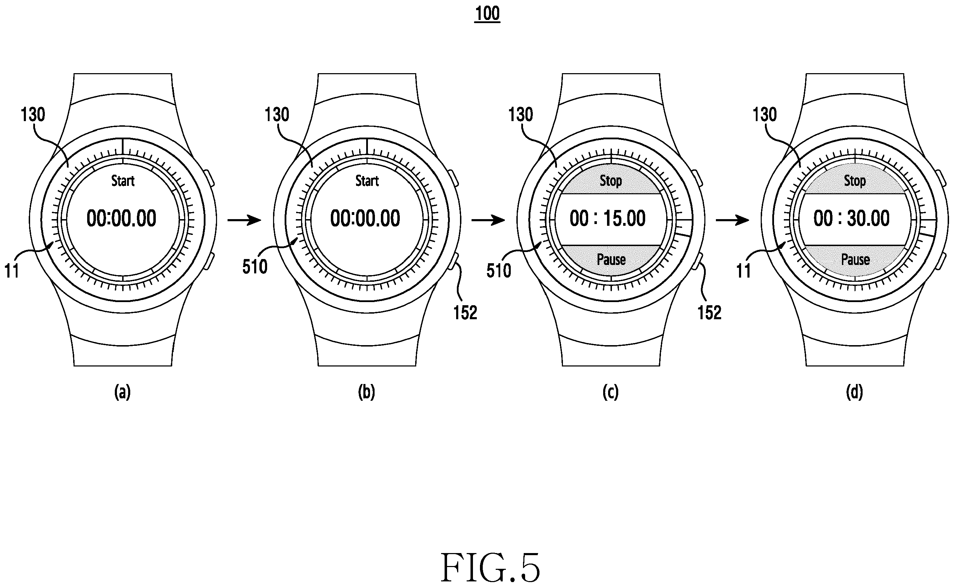

FIG. 5 is a diagram for explaining an operation in which an electronic device, according to an embodiment, changes and displays a widget image when another screen is displayed while maintaining the execution of an application.

Referring to (a) of FIG. 5, the electronic device 100 may display an object for execution of the stopwatch widget 11 on the display 130. The stopwatch widget 11 may be created through the process described above with reference to FIG. 1B.

According to an embodiment, the electronic device 100, based on a user input for selecting one region of the execution object of the widget 11 displayed on the display 130, may activate a stopwatch function.

Referring to (b) of FIG. 5, the electronic device 100 may activate a stopwatch function, and may display a stopwatch application 510 on the display 130. Based on a user input for selecting one region of the display 130 on which the stopwatch application 510 is displayed, the electronic device 100, according to an embodiment, may execute a stopwatch function.

Referring to (c) of FIG. 5, the electronic device 100 may execute a stopwatch function, and may display a stopwatch application 510 on the display 130. The electronic device 100, according to an embodiment, may display a home screen in response to a user input (e.g., an input onto the second button 152) for displaying a home screen of the electronic device 100 during the execution of the stopwatch application 510. The home screen, for example, may be a screen displaying a current time.

According to an embodiment, the electronic device 100 may display a home screen while continuing to execute the stopwatch function. According thereto, when the electronic device 100 displays the execution object for the stopwatch widget again, the execution object for the stopwatch widget may show the stopwatch function that is in progress.

Referring to (d) of FIG. 5, the electronic device 100 may display again the execution object for the stopwatch widget 11, which displays the stopwatch function, on the display 130. In this state, the electronic device 100 may display the execution object for the widget 11 such that to indicate the continued passage of time.

For example, the electronic device 100 may display the execution object for the stopwatch widget 11 so as to include a stopwatch application 510. That is, a portion of the execution object for the stopwatch widget 11 may be replaced with an execution screen of the stopwatch application 510. For example, the electronic device 100 may replace a portion showing the passage of time with an execution screen of the stopwatch application 510. However, the present disclosure is not limited thereto, and the electronic device 100 may also replace a portion displaying text, such as "Stop" or "Pause", with the execution screen of the stopwatch application 510. Accordingly, the electronic device 100 may provide a screen that changes in real time using the execution object for the stopwatch widget 11.

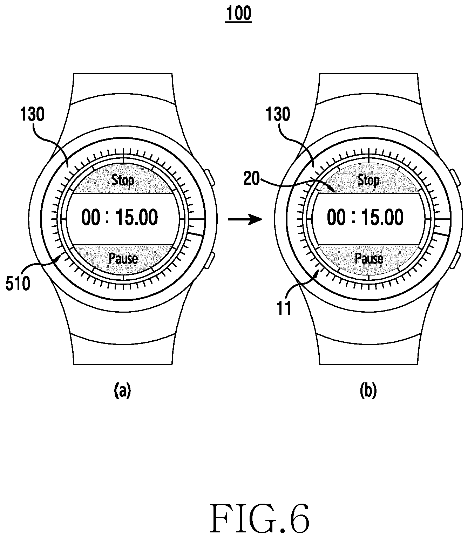

FIG. 6 is a diagram for explaining an operation in which an electronic device, according to an embodiment, changes and displays a widget image when the execution of an application is terminated.

Referring to (a) of FIG. 6, the electronic device may display a stopwatch application 510 executing a stopwatch function on the display 130. In the electronic device 100 according to an embodiment, the execution of the application may be forcibly terminated due to a user forced stop, a memory capacity problem or the like while the stopwatch application 510 is running. In this case, the electronic device 100 may display a home screen, or may be rebooted.

According to an embodiment, the electronic device 100 may display execution objects widgets including a stopwatch widget in response to a first input (e.g., the first input in FIG. 1B) of the user to display of execution objects for the widgets. At this time, the electronic device 100 may generate a second image using the screen at the time at which the electronic device 100 is terminated. The electronic device 100 may display an execution object for the widget by selecting the second image as a new widget image.

Referring to (b) of FIG. 6, the electronic device 100 may generate a second image 20, obtained by copying the screen just before the stopwatch application is terminated, and may replace an existing first image (e.g., the first image 10 in FIG. 1B), which has been used for the widget, with the second image 20 to thus use the same as a widget image of the stopwatch widget 11.

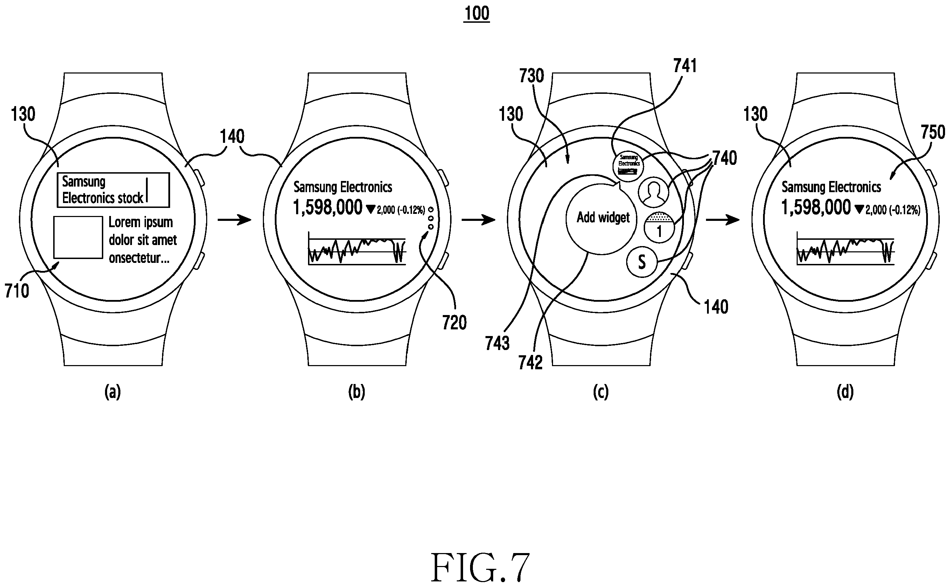

FIG. 7 is a diagram for explaining an operation in which an electronic device, according to an embodiment, creates a widget image using an image selected by a user.

Referring to (a) of FIG. 7, the electronic device 100 may display an Internet browser application 710 on the display 130. The electronic device 100 may access various web sites using the Internet browser application 710.

The electronic device 100, according to an embodiment, may display information while moving between screens of a web site, based on a touch-and-drag input of the user, which is detected on the display 130. In addition, the electronic device 100, based on the rotation of the rotary input module 140, may display information while moving between screens of a web site.

Referring to (b) of FIG. 7, based on a touch-and-drag input or on the rotation of the rotary input module 140 by the user, the electronic device 100 may display other screens of the web site on the display 130.

According to an embodiment, the electronic device 100 may display additional option objects 720 on one side of the display 130, which enable execution of additional functions for the running application. For example, based on a user input for selecting the additional option objects 720, the electronic device 100 may generate a third image for at least some or all of the screen displayed on the display. The electronic device 100 may display a user interface that allows the user to select the third image as a new widget image and to add the same as a widget.

Referring to (c) of FIG. 7, the electronic device 100 may display a widget-addition user interface 730 enabling addition of an image as a widget. The widget-addition user interface 730, for example, may display one or more images 740, which can be added as images for the web browser widget, along the edge of the display 130. The one or more images 740 may include the third image 741 described above. In addition, the widget-addition user interface 730 may display a widget-addition object 742 in the center of the display 130. The widget-addition object 742, for example, may have a circular shape having a protrusion 743 indicating a selected image.

For example, the electronic device 100, based on a user input of rotating the rotary input module 140, may display the widget-addition user interface 730 such that the protrusion 743 sequentially indicates selected images 740. However, the present disclosure is not limited thereto, and the electronic device 100, for example, may configure the user interface 730 such that the protrusion 743 indicates the image selected by a user's touch among the images 740.

The electronic device 100, based on a user input for selecting the widget-addition object 742, may add a widget using the image indicated by the protrusion 743. The added widget may be intended to activate or execute the Internet browser application 710.

Referring to (d) of FIG. 7, the electronic device 100 may display a widget 750 of the added Internet browser application 710 on the display 130.

According to another embodiment, the widget-addition user interface 730 may display a third image in the center of the display 130. In addition, the widget-addition user interface 730 may display one or more applications along the edge of the display 130.

According to an embodiment, the electronic device 100, based on the rotation of the rotary input module 140, may display one of the applications so as to be distinguished from other applications. For example, the electronic device 100 may allow a selected application to be distinguished from other applications by varying the color, shade, or brightness thereof.

For example, the electronic device 100, based on a user input for selecting the third image displayed in the center of the display 130, may create a widget of the selected application using the third image.

However, the method in which the electronic device 100 creates a widget of the application using an image selected by the user is not limited thereto.

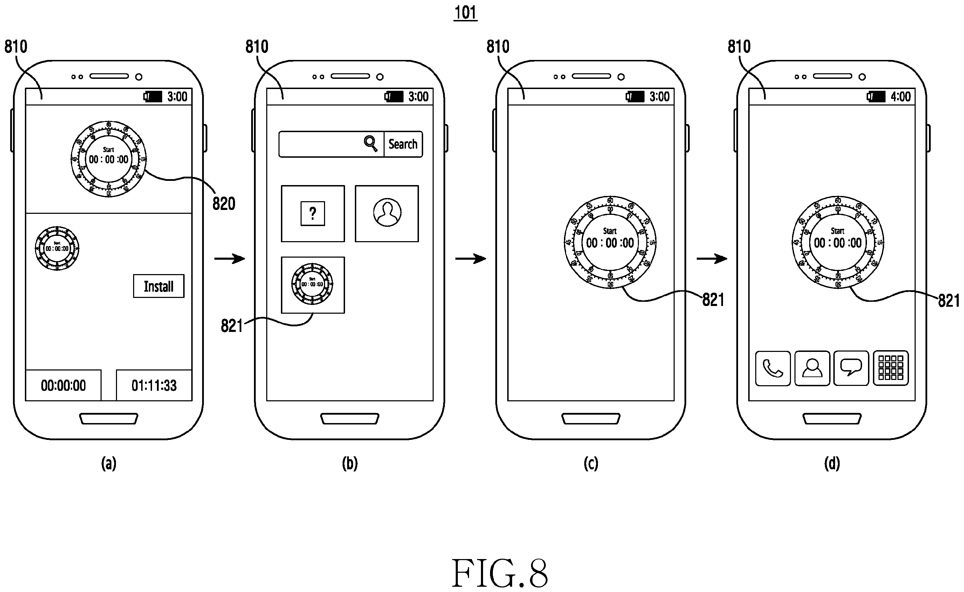

FIG. 8 is a diagram for explaining another operation in which an electronic device, according to an embodiment, receives and installs an application to thus create a widget.

Referring to (a) of FIG. 8, the electronic device 101 may be a smart phone or a tablet PC. The electronic device 101 may execute a store application from which applications can be received (or download). The user may select an application, which to download (or install) to the electronic device 101, using the store application.

In response to the user's selection of the application, the electronic device 101 may receive a description of the selected application from the store application, and may display the same on a display 810. In this case, the electronic device 101 may display, on the display 810, a representative image 820 corresponding to the selected application. The representative image 820 can be the image used to advertise the application in the application store.

Referring to (a) of FIG. 8, the electronic device 101 may display, on the display 810, content of a stopwatch application selected by the user and a representative image 820 corresponding to the stopwatch application.

The electronic device 101 may receive and install the stopwatch application, and may simultaneously or sequentially generate and store a first image (e.g., the first image 10 in FIG. 1B) using the representative image 820. The electronic device 101 may create a widget using the first image (e.g., the first image 10 in FIG. 1B). However, it is not limited thereto. For example, the electronic device 101 may generate an image corresponding to the first screen to execute the stopwatch application, and may create a widget using the same.

The method in which the electronic device 101 creates a widget of the stopwatch application using the first image (e.g., the first image 10 in FIG. 1B) has been described with reference to FIG. 1B, so the description thereof will be omitted.

Referring to (b) of FIG. 8, the electronic device 101 may display, on the display 810, one or more stored objects for execution of widgets including the created widget 821 of the stopwatch application.

Referring to (c) of FIG. 8, the electronic device 101, for example, may change the user interface to thus display a home screen in response to a user input for touching the object for execution of the widget 821 of the stopwatch application for a predetermined time or longer. The home screen, for example, may be a user interface displaying widgets or execution objects, which are frequently used by the user.

Referring to (d) of FIG. 8, the electronic device 101 may display the widget 821 of the stopwatch application on the home screen in response to a user input of terminating the touch on the widget 821 of the stopwatch application.

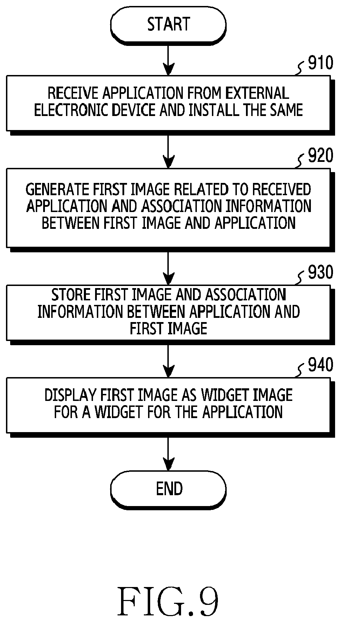

FIG. 9 is a flowchart for explaining an operation in which an electronic device, according to an embodiment, creates a widget using an image related to a received application.

Referring to operation 910, the electronic device 100 may receive an application from an external electronic device to thus install the same. For example, the electronic device 100 may receive data on an application from another electronic device or a server, which communicates with the electronic device 100, and may install the application.

Referring to operation 920, the electronic device 100 may generate a first image in relation to the received application and association information between the first image and the application. For example, the electronic device 100 may generate a first image using the first execution screen of the application, or may generate a first image using the last execution screen of the application.

The association information may mean, for example, that if the first image is selected by a user input, the electronic device 100 activates or executes the application.

Referring to operation 930, the electronic device 100 may store the generated first image and the association information showing that the first image and the application are related to each other.

Referring to operation 940, the electronic device 100 may provide the generated first image as a widget image (for example, may display the same on the display) for a widget for the application.

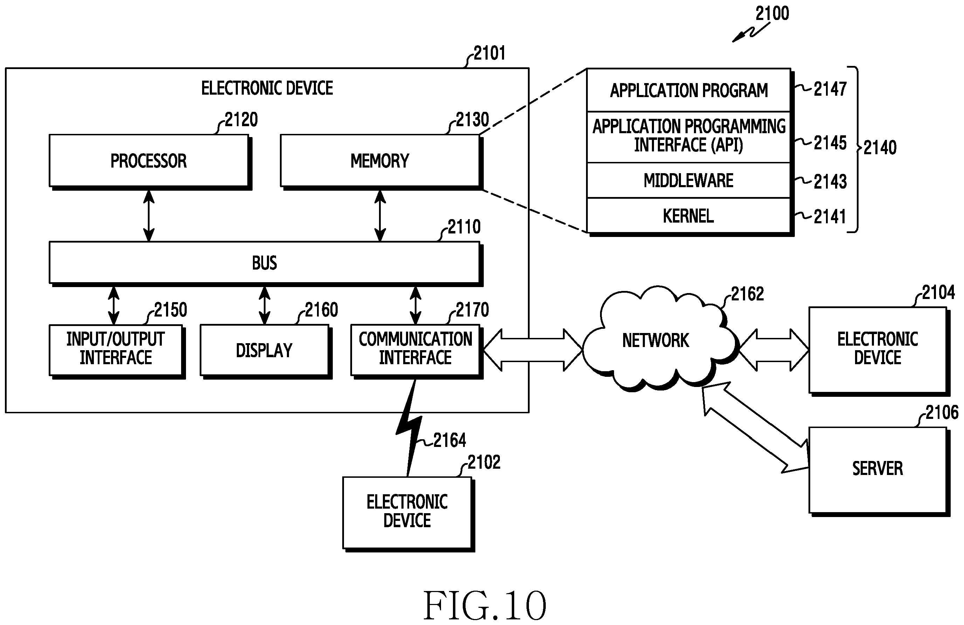

FIG. 10 is a diagram illustrating an electronic device in a network environment (2100) in various embodiments.

The electronic device 2101, for example, may include all or part of the above-described electronic device 100 of FIG. 2 or electronic device 101 of FIG. 8. The electronic devices 2101, 2102, 2104 and/or a server 2106 may be connected to each other via a network 2162 and/or a wireless (e.g., short-range) communication 2164. The electronic device 2101 includes a bus 2110, a processor (e.g., including processing circuitry) 2120, a memory 2130, an input/output interface (e.g., including input/output circuitry) 2150, a display 2160, and a communication interface (e.g., including communication circuitry) 2170. The electronic device 2101 may be provided without at least one of the components, or may include at least one additional component.

The bus 2110 may include a circuit for connecting the components 2120 through 2170 and delivering communication signals (e.g., control messages or data) therebetween.

The processor 2120 may include various processing circuitry, such as, for example, and without limitation one or more of a dedicated processor, a CPU, an AP, and a communication processor (CP). The processor 2120, for example, may perform an operation or data processing with respect to control and/or communication of at least another component of the electronic device 2101.

The memory 2130 may include a volatile and/or nonvolatile memory. The memory 2130, for example, may store one or more instructions (or commands) or data relating to at least another component of the electronic device 2101. According to an embodiment of the present disclosure, the memory 2130 may store software and/or a program 2140. The program 2140 includes, for example, a kernel 2141, middleware 2143, an application programming interface (API) 2145, and/or an application program (or applications) 2147. At least part of the kernel 2141, the middleware 2143, or the API 2145 may be referred to as an operating system (OS). The kernel 2141 may control or manage system resources (e.g., the bus 2110, the processor 2120, or the memory 2130) used for performing operations or functions implemented by the other programs (e.g., the middleware 2143, the API 2145, or the applications 2147). Additionally, the kernel 2141 may provide an interface for controlling or managing system resources by accessing an individual component of the electronic device 2101 from the middleware 2143, the API 2145, or the applications 2147.

The middleware 2143, for example, may serve an intermediary role for exchanging data between the API 2145 or the applications 2147 and the kernel 2141 through communication. Additionally, the middleware 2143 may process one or more job requests received from the applications 2147, based on their priority. The middleware 2143 may assign a priority for using a system resource (e.g., the bus 2110, the processor 2120, or the memory 2130) of the electronic device 2101 to at least one of the applications 2147, and process the one or more job requests. The API 2145, as an interface through which the applications 2147 controls a function provided from the kernel 2141 or the middleware 2143, may include, for example, at least one interface or function (e.g., an instruction) for file control, window control, image processing, or character control. The input/output interface 2150, for example, may deliver one or more instructions or data input from a user or another external device to other component(s) of the electronic device 2101, or output one or more instructions or data input from the other component(s) of the electronic device 2101 to the user or another external device.

The display 2160, for example, may include a liquid crystal display (LCD), a light emitting diode (LED) display, an organic light emitting diode (OLED) display, a microelectromechanical systems (MEMS) display, or an electronic paper display, and the like, but is not limited thereto. The display 2160, for example, may display various content (e.g., texts, images, videos, icons, and/or symbols) to the user. The display 2160 may include a touch screen, for example, and receive touch, gesture, proximity, or hovering inputs by using an electronic pen or a user's body part.

The communication interface 2170 may include various communication circuitry and, for example, may set communications between the electronic device 2101 and an external device (e.g., a first external electronic device 2102, a second external electronic device 2104, or a server 2106. The communication interface 2170 may communicate with the second external electronic device 2104 or the server 2106 over a network 2162 through wireless communication or wired communication. The communication interface 2170 may additionally communicate with the first external electronic device 2102 using a short-range wireless communication connection 2164.

The wireless communication, for example, may include cellular communication using at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM). The wireless communication may include, for example, at least one of wireless fidelity (Wi-Fi), light fidelity (Li-Fi), Bluetooth™, Bluetooth™ low energy (BLE), Zigbee, near field communication (NFC), magnetic secure transmission, radio frequency (RF), and body area network (BAN). The wireless communication may include GNSS. The GNSS may include, for example, global positioning system (GPS), global navigation satellite system (GLONASS), Beidou navigation satellite system (Beidou), or Galileo (the European global satellite-based navigation system). Hereafter, the term GPS may be interchangeably used with the term GNSS. The wired communication, for example, may include at least one of universal serial bus (USB), high definition multimedia interface (HDMI), recommended standard 232 (RS-232), power line communications, and plain old telephone service (POTS). The network 2162 may include a telecommunications network, for example, at least one of a computer network (e.g., LAN or WAN), the Internet, and a telephone network.

Each of the first and second external electronic devices 2102 and 2104 may be of the same type or of a different type from that of the electronic device 2101. According to an embodiment of the present disclosure, all or part of operations executed in the electronic device 2101 may be executed by another electronic device or a plurality of electronic devices (e.g., the electronic device 2102 or 2104, or the server 2106). To perform a function or service automatically or by request, instead of performing the function or the service by the electronic device 2101, the electronic device 2101 may request at least part of a function relating thereto from the electronic device 2102 or 2104, or the server 2106. The electronic device 2102 or 2104, or the server 2106 may perform the requested function or an additional function and send its result to the electronic device 2101. The electronic device 2101 may provide the requested function or service by processing the received result. In doing so, for example, cloud computing, distributed computing, or client-server computing techniques may be used.

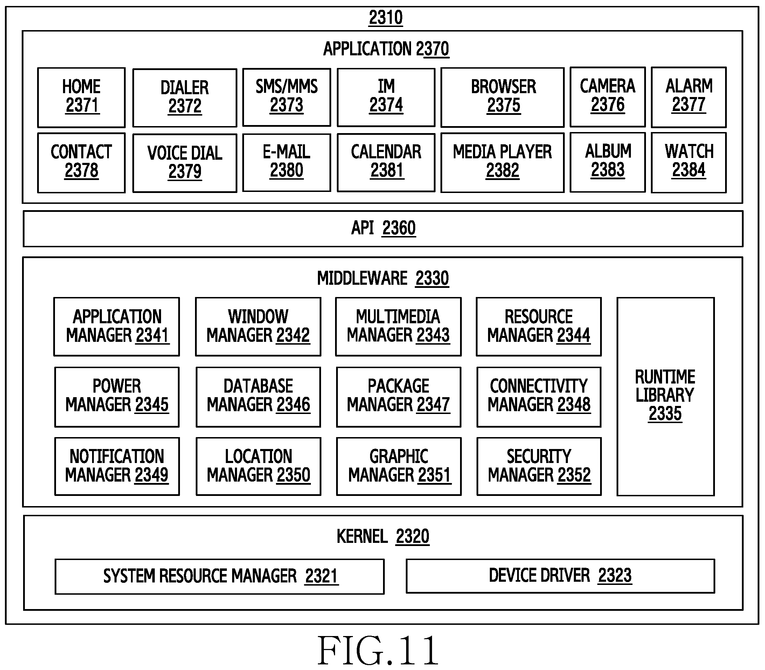

FIG. 11 is a block diagram of a program module according to various embodiments.

A program module 2310 (e.g., the program 2140) may include an OS for controlling a resource relating to the electronic device 2101 and/or applications (e.g., the applications 2147) running on the OS. The OS may include, for example, Android™, iOS™, Windows™, Symbian™, Tizen™, or Bada™.

Referring to FIG. 11, the program module 2310 includes a kernel 2320 (e.g., the kernel 2141), a middleware 2330 (e.g., the middleware 2143), an API 2360 (e.g., the API 2145), and/or an application 2370 (e.g., the applications 2147). At least part of the program module 2310 may be preloaded on an electronic device or may be downloaded from an external electronic device (e.g., the first external electronic device 2102, the second external electronic device 2104, or the server 2106).

The kernel 2320 includes, for example, at least one of a system resource manager 2321 and/or a device driver 2323. The system resource manager 2321 may control, allocate, or retrieve a system resource. According to an embodiment of the present disclosure, the system resource manager 2321 may include a process management unit, a memory management unit, or a file system management unit. The device driver 2323 may include, for example, a display driver, a camera driver, a Bluetooth™ driver, a shared memory driver, a USB driver, a keypad driver, a Wi-Fi driver, an audio driver, or an inter-process communication (IPC) driver.

The middleware 2330, for example, may provide a function commonly utilized by the application 2370, or may provide various functions to the application 2370 through the API 2360 in order to allow the application 2370 to efficiently use a limited system resource inside the electronic device. The middleware 2330 includes at least one of a runtime library 2335, an application manager 2341, a window manager 2342, a multimedia manager 2343, a resource manager 2344, a power manager 2345, a database manager 2346, a package manager 2347, a connectivity manager 2348, a notification manager 2349, a location manager 2350, a graphic manager 2351, and a security manager 2352.

The runtime library 2335 may include, for example, a library module used by a compiler to add a new function through a programming language while the application 2370 is running. The runtime library 2335 may manage input/output, manage memory, or arithmetic function processing. The application manager 2341, for example, may manage the life cycle of the applications 2370. The window manager 2342 may manage a GUI resource used in a screen. The multimedia manager 2343 may recognize a format for playing various media files and encode or decode a media file by using the codec in a corresponding format. The resource manager 2344 may manage a source code of the application 2370 or a memory space. The power manager 2345 may manage the capacity, temperature, and/or power of the battery, and determine or provide power information for an operation of the electronic device using corresponding information among the capacity, temperature, and/or power of the battery. The power manager 2345 may operate together with a basic input/output system (BIOS). The database manager 2346 may create, search, edit or otherwise use a database used in the application 2370. The package manager 2347 may manage installation or updating of an application distributed in a package file format.

The connectivity manager 2348 may manage, for example, a wireless connection. The notification manager 2349 may provide an event, such as incoming messages, appointments, and proximity alerts, to the user. The location manager 2350 may manage location information of an electronic device. The graphic manager 2351 may manage a graphic effect to be provided to the user or a user interface relating thereto. The security manager 2352 may provide, for example, system security or user authentication. The middleware 2330 may include a telephony manager for managing a voice or video call function of the electronic device, or a middleware module for combining various functions of the above-described components. The middleware 2330 may provide a module specialized for each type of OS. The middleware 2330 may dynamically delete part of the existing components or add new components. The API 2360, as a set of API programming functions, may be provided as another configuration according to the OS. For example, Android or iOS may provide one API set for each platform, and Tizen may provide two or more API sets for each platform.

The application 2370 includes at least one of a home 2371, a dialer 2372, an SMS/multimedia messaging system (MMS) 2373, an instant message (IM) 2374, a browser 2375, a camera 2376, an alarm 2377, a contact 2378, a voice dial 2379, an e-mail 2380, a calendar 2381, a media player 2382, an album 2383, a clock 2384. Additionally, the application 2370 may include health care (e.g., measure an exercise amount or blood sugar level), or environmental information (e.g., air pressure, humidity, or temperature information) application. The application 2370 may include an information exchange application for supporting information exchange between the electronic device and an external electronic device. The information exchange application may include, for example, a notification relay application for relaying specific information to the external device or a device management application for managing the external electronic device. In certain embodiments, when an application is downloaded from an external device, the application is stored in application 2370. In certain embodiments, widgets are also stored in application 2370.

The notification relay application may relay notification information from another application of the electronic device to an external electronic device, or receive and forward notification information from an external electronic device to the user. The device management application, for example, may install, delete, or update a function (e.g., turn-on/turn off of the external electronic device itself (or some components) or display brightness (or resolution) adjustment) of an external electronic device communicating with the electronic device, or an application operating in the external electronic device. The application 2370 may include a specific application (e.g., a health care application of a mobile medical device) according to a property of the external electronic device. The application 2370 may include an application received from an external electronic device. At least part of the program module 2310 may be implemented (e.g., executed) with software, firmware, hardware (e.g., the processor 210, the processor 2120), or a combination of at least two of them, and include a module, a program, a routine, a set of instructions, or a process for executing one or more functions.

According to an embodiment of the present disclosure, the electronic device may provide a widget using an image related to a received application. According to an embodiment of the present disclosure, the electronic device may perform different functions depending on a region selected by the user within the area in which the widget is displayed. According to an embodiment of the present disclosure, the electronic device may change the widget using an image desired by the user.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2140) including one or more instructions that are stored in a storage medium (e.g., internal memory 232 or external memory 234) that is readable by a machine (e.g., the electronic device 100, 101, 2101). For example, a processor (e.g., the processor 210, 2120) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The disclosed embodiments may be implemented as a software program that includes instructions stored in a computer-readable storage medium.

The computer is a device for calling stored instructions from the storage medium and, based on the called instructions, performing operation according to the disclosed embodiments, and may include the electronic device according to the disclosed embodiments.

The computer-readable storage medium may be provided in the form of a non-transitory storage medium. Here, the 'non-transitory' storage medium means that the storage medium is tangible without including signals and data may be stored in the storage medium semi-permanently or temporarily.

In addition, an electronic device or a method of controlling the electronic device, according to the disclosed embodiments, may be provided while being included in a computer program product. The computer program product may be traded between a seller and a purchaser as a commodity.

The computer program product may include a software program and a computer-readable storage medium having a software program stored therein. For example, a computer program product may include a product in the form of a software program (e.g., a downloadable app) that is electronically distributed through a manufacturer of an electronic device or an electronic market (e.g., Google Play Store or App Store). At least some of the software program may be stored in a storage medium, or may be created temporarily for electronic distribution. In this case, the storage medium may be a storage medium of a server of a manufacturer, a server of an electronic market, or a relay server for temporarily storing the software program.

The computer program product may include a storage medium of a server or a storage medium of a terminal in a system including a server and an electronic device (e.g. a wearable device). Alternatively, if there is a third device (e.g. a smart phone) in communication with the server or the terminal, the computer program product may include a storage medium of the third device. Alternatively, the computer program product may include a software program, which is transmitted from a server to an electronic device or a third device, or which is transmitted from a third device to an electronic device.

In this case, one of the server, the electronic device, and the third device may execute the computer program product to thus perform the method according to the disclosed embodiments. Alternatively, two or more of the server, the electronic device, and the third device may execute the computer program product to thus perform the method according to the disclosed embodiments through distribution.

For example, a server (e.g., a cloud server, an artificial intelligence server, or the like) may execute a computer program product stored in the server to thus perform control such that a terminal, which communicates with the server, performs the method according to the disclosed embodiments.

As another example, the third device may execute a computer program product to thus perform control such that an electronic device, which communicates with the third device, performs the method according to the disclosed embodiments. As a specific example, the third device may remotely control the wearable device such that the wearable device creates a widget.

When the third device executes a computer program product, the third device may download the computer program product from the server, and may execute the downloaded computer program product. Alternatively, the third device may execute a computer program product provided in a preloaded manner to thus perform the method according to the disclosed embodiments.

## Claims

1. An electronic device comprising:
a display;
at least one processor operatively connected to the display; and
a memory operatively connected to the processor,
wherein the memory stores instructions that, when the executed by the one or more processors, cause the one or more processors to:
when installing an application received from an external electronic device, generate and store a first image in relation to the application and association information between the first image and the application, and
display, on the display, the first image as a widget image for a widget for the application.

2. The electronic device of claim 1, wherein the first image comprises at least one of:
an image obtained by copying a first execution screen of the application,
an image obtained by copying a last execution screen of the application,
a representative image provided by the external electronic device providing the application, or
an image of at least one image provided by the application.

3. The electronic device of claim 1, wherein the memory is configured to store instructions that, when executed cause the at least one processor to:
perform a first function in response to selection of a first region in an area of the display on which the widget is displayed, and
perform a second function different from the first function, in response to selection of a second region different from the first region.

4. The electronic device of claim 3, wherein the first function displays a preparation screen of the application and the second function displays an execution screen of the application.

5. The electronic device of claim 3, wherein the memory is configured to store instructions that, when executed, cause the at least one the processor to:
generate association information between coordinate information corresponding to the first region on the display and the first function executed in response to selection of the first region, and
generate association information between coordinate information corresponding to the second region on the display and the second function executed in response to selection of the second region.

6. The electronic device of claim 1, wherein the memory is configured to store instructions that, when executed, cause the at least one processor to:
when the electronic device displays another image on the display while maintaining execution of the application and an object for executing the widget is displayed on the display again, display an execution screen of the application on the object for executing the widget.

7. The electronic device of claim 1, wherein the memory is configured to store instructions that, when executed, cause the at least one processor to:
when the electronic device terminates execution of the application, generate a second image using the last execution screen of the application, and
display the second image as a widget image of the application, instead of the first image.

8. The electronic device of claim 1, wherein the memory is configured to store instructions that, when executed, cause the at least one processor to:
generate a third image using at least a portion of an execution screen of the application, and
display the third image as a widget image of widget for the application, instead of the first image.

9. A method of controlling an electronic device, the method comprising:
installing an application received from an external electronic device;
generating a first image in relation to the application and association information between the first image and the application;
storing the first image and the association information between the application and the first image; and
displaying, on a display, the first image as a widget image of a widget for the application.

10. The method of claim 9, wherein the first image comprises at least one of:
an image obtained by copying a first execution screen of the application,
an image obtained by copying a last execution screen of the application,
a representative image provided by the external electronic device providing the application, or
an image of at least one image provided by the application.

11. The method of claim 9, further comprising:
performing a first function in response to selection of a first region in an area on which the widget is displayed; and
performing a second function different from the first function in response to selection of a second region different from the first region.

12. The method of claim 11, further comprising:
generating association information between coordinate information corresponding to the first region on a display and the first function executed in response to selection of the first region; and
generating association information between coordinate information corresponding to the second region on the display and the second function executed in response to selection of the second region.

13. The method of claim 9, wherein the method further comprises:
displaying another image on the display while maintaining the execution of the application; and
when the an object for executing the widget is displayed on the display again, displaying an execution screen of the application on the object for executing the widget.

14. The method of claim 9, wherein the method further comprises:
when an execution of the application is terminated, generating a second image using the last execution screen of the application and displaying the second image as a widget image of the application, instead of the first image.

15. The method of claim 9, further comprising:
generating a third image using at least a portion of an execution screen of the application; and
displaying the third image as a widget image of the widget for the application, instead of the first image.
